Europäisches Patentamt

European Patent Office

Office européen des brevets

(11) Veröffentlichungsnummer: **0 345 745**
**A2**

## (12) EUROPÄISCHE PATENTANMELDUNG

(21) Anmeldenummer: **89110269.1**

(22) Anmeldetag: **07.06.89**

(51) Int. Cl.4: **F01C 19/08 , F02B 53/08**

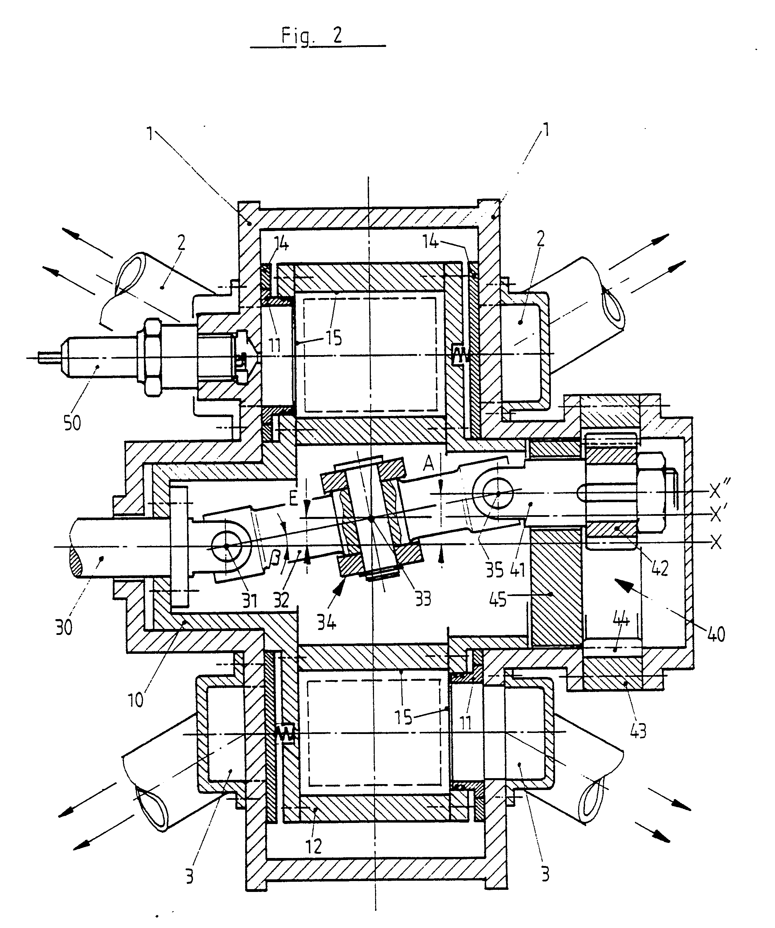

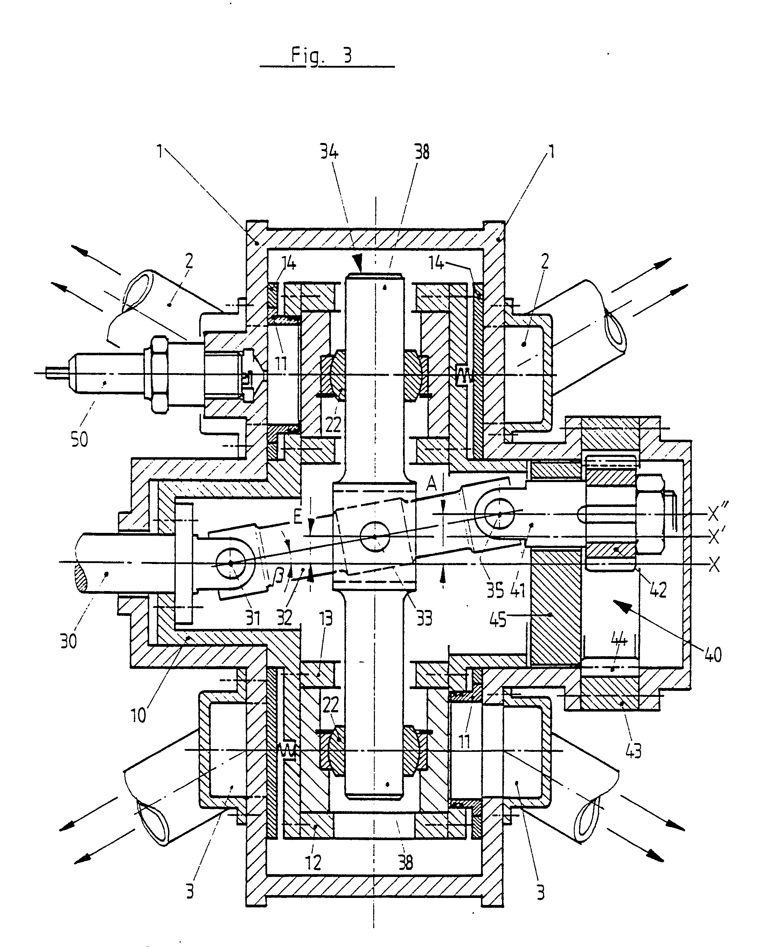

Ein Antrag gemäss Regel 88 EPÜ auf Berichtigung der Beschreibung und der Figuren 2 und 3 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **09.06.88 DE 3819665**

(43) Veröffentlichungstag der Anmeldung:
**13.12.89 Patentblatt 89/50**

(84) Benannte Vertragsstaaten:
**FR GB IT**

(71) Anmelder: **Chun, Gil-Hwan**
**Bocholter Strasse 20**
**D-4236 Hamminkeln-Dingden(DE)**

(72) Erfinder: **Chun, Gil-Hwan**
**Bocholter Strasse 20**
**D-4236 Hamminkeln-Dingden(DE)**

(74) Vertreter: **Funken, Josef, Dipl.-Ing.**
**Hochstrasse 3e**
**D-4133 Neukirchen-Vluyn(DE)**

(54) **Rotationskolbenmotor.**

(57) Die Erfindung betrifft einen Rotationskolbenmotor mit einem feststehenden Motorgehäuse und einem in einem Absperrteil umlaufenden und an einer Motorwelle angreifenden Kolben, der im Absperrteil umlaufende Arbeitsräume mit sich periodisch änderndem Volumen bildet. Zur Erreichung einer hohen Motorleistung bei geringem Gewicht und einwandfreier Abdichtung der Arbeitsräume ist das Absperrteil ringförmig ausgebildet mit mindestens zwei in Umfangsrichtung nebeneinander angeordneten und um eine Drehachse X umlaufenden bogenförmigen Kolben, zwischen denen die Arbeitsräume für einen Hubeingriff gebildet werden, und die Kolben stehen in radialem Eingriff mit jeweils einem Helebarm eines exzentrisch zur Drehachse X gelagerten und an der Motorwelle befestigten Hebels zur Übertragung eines Kraftmoments von den Kolben auf die Motorwelle oder umgekehrt, wobei die jeweilige Länge der Hebelarme bei Drehung der Kolben unter Ausbildung ungleichlanger Hebelarme zur gleichförmigen Drehung des Hebels über Verbrennungsdruck variiert.

Fig. 1

## Rotationskolbenmotor

Die Erfindung betrifft einen Rotationskolbenmotor mit einem feststehenden Gehäuse und einem in einem Absperrteil umlaufenden und an einer Motorwelle angreifenden Kolben, der im Absperrteil umlaufende Arbeitskammern mit sich periodisch änderndem Volumen bildet, um auf diese Weise bei der Verbrennung von Kraftstoff freiwerdende thermische Energie effektiv in mechanische Energie umzuwandeln.

Zu derartigen bekannten Rotationskolbenmotoren zählt insbesondere der Wankelmotor, ein Kreiskolbenmotor, bei dem das Absperrteil still steht, also selbst Teil des feststehenden Gehäuses ist, während der Kolben oder das Leistungsteil in dem Gehäuse rotiert. Der Wankelmotor besteht dabei im wesentlichen aus einer Exzenterwelle sowie einem auf dem Exzenter drehbaren dreikantigen Kolben, der einen Innenverzahnten Zahnkranz aufweist und auf einer Exzenterscheibe der Exzenterwelle um die am Gehäuse befestigte Außenverzahnung über einen Zahneingriff eine Kreisbewegung ausführt. Bei einem vorzugsweise angewandten Übersetzungsverhältnis 2 : 3 zwischen Zahnrad und innenverzahntem Planetenrad entsteht eine länglich ovale, eingeschnürte Kurve, die von einer Dreiecksspitze des Kolbenumrisses einmal umfahren wird, wenn die Exzenterwelle drei volle Umläufe ausführt. Jeder Arbeitsraum zwischen dem Kolben und der Gehäusewandung erfährt bei diesen Bewegungsverhältnissen zwei abwechselnde Vergrößerungen und Verkleinerungen, was für einen Viertaktprozeß ausgenutzt werden kann.

Größe und Gewicht des Wankelmotors sind im Verhältnis zu gleichwertigen Hubmotoren ungewöhnlich klein, die Zahl der Bauteile ist gering und die Laufruhe ist besonders gut. Der Wankelmotor weist jedoch auch wesentliche Nachteile auf, die in seiner teuren Herstellung, der schwierigen Abdichtung des dreieckigen Kolbens, in dem unrunden Zylinder, dem hohen Verschleiß und der dadurch bedingten Reparaturanfälligkeit sowie in der verhältnismäßig niedrigen Motorleistungsgrenze begründet sind.

So ist aus der DE-OS 25 22 860 ein Rotations-Brennkraftmotor bekannt, der zur Vermeidung der vorstehend genannten Nachteile der Rotationskolbenmotoren als Sternkammermotor ausgebildet ist mit einem in einem Arbeitsraum zentrisch umlaufenden Rotor, der radial bewegliche Triebwände zur Aufteilung des Arbeitsraumes in sternförmig angeordnete Brennkammern aufweist, wobei die Radialbewegung der Triebwände zur Erzeugung einer periodischen Volumenänderung der Brennkammern über eine Umdrehung des Rotors durch mindestens eine Kurvenbahn gesteuert wird. Dieser Rotations-Brennkraftmotor soll gegenüber dem Wankelmotor den Vorteil besitzen, daß die Herstellungskosten niedrig sind, die Motorleistung bei kleinen Abmessungen, geringem Gewicht und niedrigem Kraftstoffverbrauch über den gesamten Drehzahlbereich groß ist. Aber auch dieser Rotationskolbenmotor besitzt noch die gleichen Nachteile des Wankelmotors hinsichtlich Arbeitskammerform, ungünstigen Verdichtung und einer einwandfreien Abdichtung der Arbeitsräume. Denn auch hier wandert während des Arbeitsspiels der Arbeitsraum in Drehrichtung des Kolbens, d.h. die Außenwand des Arbeitsraumes ändert sich ständig. Infolgedessen sind die wärmeabführenden Flächen zu groß, so daß keine wie bei Hubkolbenmotoren erreichbare Verdichtungs- und Zünddrücke erzielbar sind.

Aus der DE-OS 33 30 125 ist eine Verbrennungskraftmaschine mit Schwenkkolbenverbrennungsmotor und Schwenkkolbenverdichter bekannt, bei der in einem Schwenkkolbenzylinder mit Trennsegmenten und Kolbensegmenten Brennkammern angeordnet sind, um einerseits bessere Gewichtsverhältnisse als bei Hubkolbenmotoren und andererseits bessere Leistungsverhältnisse als bei Rotationskolbenmotoren zu erreichen. Diese bekannte Verbrennungskraftmaschine arbeitet derart, daß durch den Verbrennungsdruck in den Brennkammern der Schwenkkolben in hin- und herpendelnde Bewegungen versetzt wird. Über Rädergetriebe und Freiläufe erfolgt eine Umsetzung der Pendelbewegung des Schwenkkolbens in eine fortlaufende Rotationsbewegung. Der Verbrennungsdruck wirkt bei diesem Prinzip auf beide Seiten der Kolbensegmente, deren Pendelbewegung direkt ohne Zwischenschaltung eines Getriebes umgesetzt wird. Dieser Motor kann als 4-Taktmotor mit Ein- und Auslaßventilsteuerung oder auch als 2-Taktmotor mit Verdichter oder ventillos gesteuert ausgeführt sein. Selbst wenn der Verdichtungsdruck in den gegenüberliegenden Arbeitskammern die Kolbenbewegung in den Endlagen abfedert, ist die Laufruhe dieser Verbrennungskraftmaschine erheblich schlechter und der Verschleiß erheblich höher als bei Rotationskolbenmotoren.

Aufgabe der Erfindung ist es daher, einen Rotationskolbenmotor zu schaffen, der bei geringem Gewicht eine hohe Motorleistung liefert und dabei eine einwandfreie Abdichtung der Arbeitsräume erlaubt.

Diese Aufgabe wird durch eine Rotationskolbenmotor der genannten Art derart gelöst, daß das Absperrteil ringförmig ausgebildet ist mit mindestens zwei in Umfangsrichtung nebeneinander angeordneten und um eine Drehachse X umlaufenden bogenförmigen Kolben, zwischen denen die Arbeitskammern für einen Hubeingriff gebildet werden, und die Kolben in radialem Eingriff stehen mit jeweils einem Hebelarm eines exzentrisch zur Drehachse X gelagerten und an der Motorwelle befestigten Hebel zur Übertragung eines Kraftmoments von den Kolben auf die Motorwelle oder umgekehrt, wobei die jeweilige Länge der Hebelarme bei Drehung der Kolben unter Ausbildung ungleicharmiger Hebel zur gleichförmigen Drehung des Hebels über Verbrennungsdruck variiert.

Hierdurch wird ein Rotationskolbenmotor geschaffen, der durch ähnliche thermodynamische Vorgänge wie bei einem Hubkolbenmotor angetrieben wird. Das Arbeitsspiel ereignet sich dabei im gleichen Raum, wodurch hohe Verdichtungs- und Zünddrücke erreichbar sind. Die durch das Verbrennungsgas aufgeheizten Arbeitsräume werden durch Frischgas beim Ansaugvorgang derart abgekühlt, daß der Arbeitsraum, die Kolben und mögliche Dichtkörper thermisch gering belastet werden. Durch die Formgebung der Arbeitsräume wird somit eine vergleichbar hohe Verdichtung wie bei Hubkolbenmotoren erreicht. Zudem kann eine saubere Trennung von Ein- und Auslaß sowie ein günstiger Brennstoffverbrauch durch diese ideale Arbeitsraumform erzielt werden. Gegenüber herkömmlichen Rotationskolbenmotoren folgt daraus für den erfindungsgemäßen Rotationskolbenmotor eine wesentlich höhere Motorleistung unter gleichzeitiger Bewahrung der für Rotationsmotoren bekannt guten Laufruhe und der Vorteile hinsichtlich geringer Größe und geringem Gewicht.

Der Hebel des Rotationskolbenmotors kann zur exzentrischen Lagerung an einer Gelenkwelle gelenkig befestigt sein, wobei die Gelenkwelle einerseits an der Motorwelle und andererseits an einem Lager im Motorgehäuse mit einer Auslenkung A zur Drehachse X angelenkt ist. Zur Erzielung eines geeigneten Hubs kann folglich die Größe der Exzentrizität und der Auslenkung entsprechend gewählt werden. Dies kann insbesondere durch eine schräg angeordnete Gelenkwelle mit kleiner Exzentrizität gegenüber einer großen Auslenkung erreicht werden.

Dabei kann das Lager als innenverzahntes Hohlrad und einem in diesem kämmenden Ritzel ausgebildet sein. Bei Verwendung von zwei Kolben und einem Verhältnis der Zähnezahl der Innenverzahnung zu der des Ritzels von 2 : 1, kann nach dem üblichen Viertaktverfahren gearbeitet werden. Allerdings spielen sich die Arbeitsvorgänge "Ansaugen, Verdichten, Expandieren, Auspuffen" in jeder der zwei Kammern mit einer Phasenverschiebung von 90° ab.

Ferner kann die durch die Kolbenform bereits einfachere Dichtung dadurch unterstützt werden, daß das an eine Kolbenlaufbahn gelangende Schmieröl von an den Kolben vorsehbaren Dichtstreifen abgestreift und durch die Zentrifugalkräfte nach außen beschleunigt wird. Die aufwendige und umweltbelastende Öl-Kraftstoffgemisch-Schmierung für Rotationskolbenmotoren fällt damit weg.

Weitere Ausgestaltungen und Vorteile der Erfindung sind den Unteransprüchen und der nachfolgenden Beschreibung zu entnehmen.

Die Erfindung wird nachstehend anhand des in den beigefügten Abbildungen dargestellten Ausführungsbeispiels näher erläutert.

Fig. 1 zeigt einen Querschnitt eines Rotationskolbenmotors.

Fig. 2 zeigt einen Längsschnitt des Rotationskolbenmotors entlang einer in Fig. 1 durch Pfeile angezeigten Linie.

Fig. 3 zeigt den Längsschnitt gemäß Fig. 2 mit einem um 90° gedreht dargestelltem Hebel.

Fig. 4 zeigt einen Arbeitsablauf im Viertaktverfahren in schematischer Darstellung.

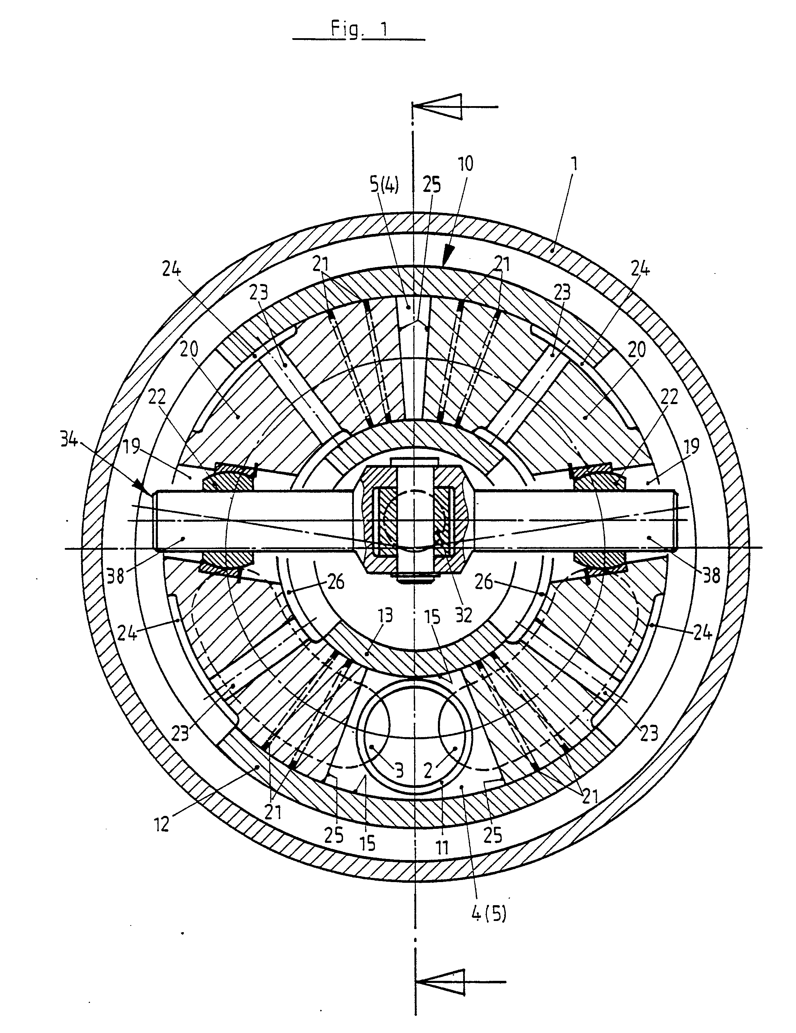

Der in Fig. 1 dargestellte Rotationskolbenmotor umfaßt ein Motorgehäuse 1, in dem ein als Läufer ausgebildetes Absperrteil 10 in Form eines im wesentlichen hohlen Ringes zentrisch angeordnet ist. Dieses Absperrteil 10 ist um eine Drehachse X, dargestellt in Fig. 2, gleichförmig drehbar und weist eine Außenwandung 12 und eine Innenwandung 13 auf, die eine Kolbenlaufbahn 15 begrenzen. Die Außenwandung 12 und die Innenwandung 13 erstrecken sich gegenüberliegend zueinander nur über Teilbereiche des Hohlringes und zwar an Stellen an denen Arbeitsräume 4, 5 mit veränderlichem Volumen entstehen. Die Außenwandung 12 und Innenwandung 13 besitzen folglich solche Umfangserstreckung besitzen, daß das Absperrteil 10 die Arbeitsräume 4, 5 einschließen kann, während Ausnehmungen die Aufnahme einer Führung für das Leistungsteil ermöglichen.

In dem Absperrteil 10 sind als Leistungsteil zwei bogenförmige Kolben 20 angeordnet, die einen im wesentlichen rechteckigen Querschnitt haben und in Umfangsrichtung nebeneinander angeordnet sind für ein Rotieren in dem Absperrteil 10. Dabei besitzen die beiden Kolben 20 eine Gesamtumfangserstreckung, die kleiner ist als die Länge der Kolbenlaufbahn 15 in dem Absperrteil 10. Jeder Kolben 20 weist eine mittige radiale Bohrung 19 auf, in der ein Hebelarm 38 eines zweiarmigen Hebels 34 mittels einer Führung 22 radial verschiebbar angelenkt ist. Dieser Hebel 34 ist mit einer Exzentrizität E zur Drehachse X drehbar an einer Gelenkwelle 32 befestigt und erstreckt sich mit seinen Hebelarme 38 senkrecht zur Drehachse X. Bei einer derartigen Eingriffsstellung des Hebels 34 mit den Kolben 20 schließen benachbarte Frontseiten 25 der zwei gegenüberliegenden Kolben 20 jeweils einen der Arbeitsräume 4, 5 ein. Die zwei Arbeitsräume 4, 5 sind um 180° zueinander verdreht, wobei einer der Arbeitsräume 4, 5 ein minimales Volumen und der andere der Arbeitsräume 5, 4 ein maximales Volumen einschließt, wenn gleichlange Hebelarme 38 mit den beiden Kolben 20 in Eingriff stehen. Da die Drehachse X der Kolben 20 und eine Drehachse X' des Hebels 34 nicht koinzidieren, weil der Hebel 34 sich um die Drehachse X' parallel zur Drehachse X mit einem Abstand entsprechend der Exzentrizität E dreht, gelangen bei einer Umdrehung des Hebels 34 ungleichlange Hebelarme 38 mit den Kolben 20 in Eingriff des Hebels 34. Dies hat zur Folge, daß in Abhängigkeit von der Länge der Hebelarme 38, die Umfangsgeschwindigkeit der Kolben 20 sich ändert. Dadurch wird ein Hubeingriff der bei Kolben 20 erzeugt, der eine Volumenänderung der Arbeitsräume 4, 5 hervorruft. Bei einer Umdrehung des Hebels 34 nimmt hier jeder der Arbeitsräume 4, 5 ein mimimales und maximales Volumen an. Sofern der Hebel 34 direkt an einer Motorwelle befestigt wäre, könnte mit einem derartig ausgebildeten Absperrteil 10 und Leistungsteil 20 ein Zwei-Taktverfahren durchgespielt werden. Denn sobald der Hebel 34 aus der in Fig. 1 dargestellten Position mit zwei gleichlangen Hebelarmen 38 herausgedreht ist, übt ein auf beide Stirnflächen 25 wirkender Verbrennungsdruck ein Drehmoment auf den Hebel 34 und damit eine Motorwelle aus, wodurch das vorstehend beschriebene Arbeitsspiel in Gang kommt. Dabei ist das Absperrteil 10 gleichförmig mit der Drehung des Hebels 34 zu drehen, so daß stets die gleiche Bereiche der Innenwandung 13 und Außenwandung 12 die Arbeitsräume 4, 5 begrenzen und damit starr inbezug auf das Leistungsteil sind.

Für die Zuführung von Frischgas weist das Motorgehäuse 1 jeweils eine Einlaßöffnung 3 und eine Auslaßöffnung 2 für einen Arbeitsraum 4, 5 auf, die insbesondere in Fig. 2 deutlich erkennbar sind. Bei einem Arbeitsspiel im Zweitaktverfahren wären natürlich nur eine Einlaßöffnung 3 und eine Auslaßöffnung 2 erforderlich. Diese Öffnungen 2, 3 erstrecken sich bananenförmig über jeweils etwa ein Viertel der Kolbenlaufbahn 15, damit während des Ansaug- oder Auspuffvorganges kontinuierlich Frischgas zugeführt oder Verbrennungsgas abgeführt werden kann. Jeweils eine Einlaßöffnung 3 und eine Auslaßöffnung 2 sind benachbart zueinander angeordnet und sind jeweils mit einem Dichtkörper 11 ausgestattet, der durch Drehen des Absperrteils 10 über die Einlaßöffnung 3 und die Auslaßöffnung 2 gleitet und dadurch das Einströmen des Frischgases und das Ausströmen des verbrannten Gases gesteuert werden kann.

Für eine einwandfreie Abdichtung der Arbeitsräume 4, 5 weisen die Kolben 20 benachbart zu ihren Stirnseiten 25 Dichtstreifen 21 auf, die mit der Außenwandung 12 und der Innenwandung 13 in Eingriff stehen. Vorzugsweise sind zwei mit Abstand zueinander angeordnete Dichtstreifen 21 vorgesehen. Desweiteren besitzt jeder Kolben 20 benachbart zu seinem Eingriff mit dem Hebel 34 jeweils eine radiale Bohrung 23 für einen Durchtritt von zentral in das Motorgehäuse 1 einspritzbarem Schmieröl. Dieses Schmieröl kann bei Rotation der Kolben 20 und des Absperrteils 10 über die Zentrifugalkraft an die Außenwandung 12 gelangen. Schließlich kann die Schmierung der Kolben 20 noch durch Einkerbungen 24, 26 an der Innen- und Außenseite der Kolben 20 in Umfangsrichtung und zwar im Bereich der Bohrung 23 unterstützt werden. Diese Einkerbungen 24, 26 füllen sich mit Schmieröl und befördern somit beim Rotieren der Kolben 20 stets neues Schmieröl zwischen Außenwandung 12 sowie Innenwandung 13 und Kolben 20. Diese zusätzlichen Bohrungen 23 und Einkerbungen 24, 26 gewährleisten eine gute Schmierung, die zudem sparsam im Gebrauch ist.

Fig. 2 dient nunmehr zur Darstellung der Befestigung des Hebels 34 an der Gelenkwelle 32 und seiner Anlenkung zwischen einer Motorwelle 30 und einem fest mit dem Motorgehäuse 1 verbundenen Lager 40 sowie zur Darstellung des Lagers 40 selbst. Die Motorwelle 30, deren Drehachse mit der Drehachse X der Kolben 20 koinzidiert, ist fest mit dem Absperrteil 10 und gelenkig aber drehfest über einen ersten Anlenkungspunkt 31 mit einem ersten Ende der Gelenkwelle 32 verbunden. Bei Drehung der Motorwelle 30 drehen sich somit Absperrteil 10 und Gelenkwelle 32 gleichförmig. Die Gelenkwelle 32 ist mit einem zweiten Ende über einen zweiten Anlenkungspunkt 35 gelenkig aber drehfest an einem Lagerende 41 befestigt. Der erste Anlenkungspunkt 31, der auf der Drehachse X liegt, schließt mit der geradlinigen Verbindung zum zweiten Anlenkungspunkt 35, wobei der geradlinigen Verbindung die Längserstreckung der Gelenkwelle 32 entspricht, einen Winkel ß ein. Daraus folgt eine Auslenkung A des zweiten Endes der Gelenkwelle 32 gegenüber der Drehachse X. An dem Lagerende 41 ist ein Ritzel 42 befestigt, das in einem Hohlrad 43 kämmt. Dieses Hohlrad 43 ist fest mit dem Motorgehäuse 1 verbunden und ist zentrisch zur Drehachse X angeordnet. Eine Zähnezahl der Innenverzahnung 44 des Hohlrades 43 verhält sich zu einer Zähnezahl des Ritzels 42 wie 2 : 1. Treibt man die Motorwelle 30 an, so bewegt sich das Lagerende 41 und das Ritzel 42 auf einem konzentrischen Kreis um eine Drehachse X'' mit gleicher Winkelgeschwindigkeit wie die Motorwelle 30, d. h. wenn diese eine volle Drehung um die Drehachse X ausgeführt hat, so haben auch das Lagerende 41 und das Ritzel 42 eine volle Drehung um die Drehachse X'' ausgeführt. Da sich aber das Ritzel 42 in der Innenverzahnung 44 abwälzt, gleitet das Lagerende 41 mit der daran angelenkten Gelenkwelle 32 auf einer Lauffläche mit der Auslenkung A zur Drehachse X in entgegengesetzter Richtung. Die Gelenkwelle 32 führt folglich einerseits eine Drehbewegung um die geradlinige Verbindung zwischen den zwei Anlenkpunkten 31, 35 mit gleicher Winkelgeschwindigkeit wie die Motorwelle 30 und eine Präzisionsbewegung auf einem Kegelmantel, wobei die Kegelspitze im ersten Anlenkungspunkt 31 liegt, während der Radius des Kegelbodens durch die Auslenkung A definiert ist. Zur Abstützung des Lagerendes 41 kann dabei noch eine drehbar gelagerte Scheibe 45 vorgesehen sein.

An der Gelenkwelle 32 ist der Hebel 34 drehfest aber gelenkig mit dieser befestigt. Eine Befestigungsebene des Hebels 34 senkrecht zur geradlinigen Verbindung zwischen den beiden Anlenkpunkten 31, 35 definiert im Schnittpunkt dieser beiden Ebenen einen Befestigungspunkt 33, dessen Abstand von der Drehachse X eine Exzentrizität E der Lagerung des Hebels 34 zur Drehachse X bestimmt. Während das Lagerende 41 mit dem zweiten Anlenkungspunkt 35 auf einer Lauffläche mit der Auslenkung A gleitet, gleitet der Hebel 34 auf der Lauffläche mit der Exzentrizität E relativ zur Motorwelle 30. Hier halbiert die Befestigungsebene des Hebels 34 die Gesamtlänge der Gelenkwelle 32, so daß die Exzentrizität E gleich 1·2 A ist. Um die Zahnradgeometrie der Innenverzahnung 44 und des Ritzels 42 ausreichend dimensionieren zu können, wird ein bestimmte Auslenkung A benötigt. Ist die Exzentrizität E gleich groß· wie die Auslenkung A entsteht ein großer Hub, so daß daher vorzugsweise die Exzentrizität E klein gegenüber der Auslenkung A gewählt wird. Schließlich sind aus Fig. 2 noch Dichtstreifen 14 zum Abdichten der Einlaßöffnung 3 und Auslaßöffnung 2 erkennbar, die einerseits ein Eintreten von Öl durch die genannten Öffnungen in darin anschließende Kanäle verhindern und andererseits einen Eintritt von Frisch- oder Verbrennungsgas in den Kolbeninnenraum unterbinden.

Fig. 3 zeigt gegenüber der Fig. 2 den Hebel 34 um 90° gedreht, um die vorstehend beschriebene Anordnung und Lage des Hebels 34 noch grafisch deutlich zu machen. Zudem sind die Führungen 22 für einen radial verschiebbaren Eingriff der Hebelarme 38 mit jeweils einem der Kolben 20 zusammen mit diesen dargestellt. Im übrigen entspricht Fig. 3 der Fig. 2.

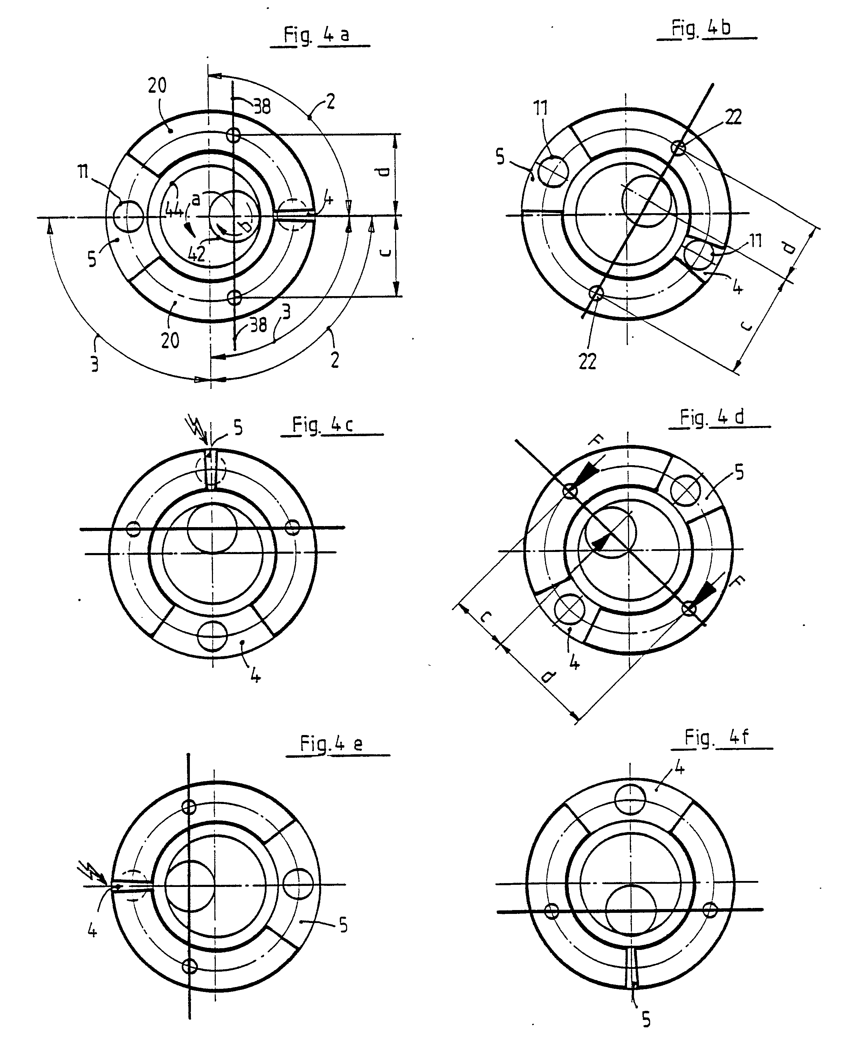

Ein Viertakt-Arbeitsspiel des vorstehend beschriebenen Rotationskolbenmotors wird nachfolgend anhand der Fig. 4 unter Beschreibung der Unterfiguren 4a) bis 4f) beschrieben:

In Fig. 4a nimmt der Arbeitsraum 4 das kleinste Volumen und der Arbeitsraum 5 das größte Volumen ein, wobei die Längen der Hebelarme 38 durch Strecken c und d dargestellt werden, die gleich lang sind.

In Fig. 4b hat sich der Hebel 34 mit dem Ritzel 42 in Pfeilrichtung b gedreht, während das Ritzel 42 mit seiner Drehachse X″ um die Drehahse X in Pfeilrichtung a gleitet. Durch diese Bewegung verändern sich die Längen c, d der Hebelarme 38. Die Länge c des einen Hebelarmes 38 vergrößert sich, während die Länge d des gegenüberliegenden Hebelarmes 38 sich verkürzt. Infolge der Veränderung der Längen c, d bewegt sich der Kolben 20, der mit dem längeren Hebelarm 38 in Eingriff steht, schneller als der Kolben 20, der mit dem kürzeren Hebelarm 38 in Eingriff steht, so daß sich das Volumen des Arbeitsraumes 4 kontinuierlich vergrößert, dagegen das Volumen des Arbeitsraumes 5 kontinuierlich sich verkleinert.

Fig. 4c zeigt das Arbeitsspiel nach 90° Drehung um die Drehachse X. Während der Arbeitsraum 4 bei Arbeitsverlauf von Fig. 4a zu Fig. 4c fortlaufend durch die Einlaßöffnung 3 und gesteuert über den Dichtkörper 11 ein Brennstoff-Luftgemisch angesaugt hat, verdichtet der Arbeitsraum 5 das bereits angesaugte Gasgemisch. In Fig. 4c ist dann der Zeitpunkt des Arbeitsspiel dargestellt, bei dem der Ansauvorgang in dem Arbeitsraum 4 beendet ist und auch der Verdichtungsvorgang in dem Arbeitsraum 5 beendet ist, so daß durch eine Zündanlage 50, dargestellt in Fig. 2 und Fig. 3, das verdichtete Gasgemisch gezündet wird.

Fig. 4d zeigt den auf die Differnzlänge der Hebelarme wirkenden Verbrennungsdruck, angezeigt durch die beiden Pfeile F, der an beiden Eingriffsstellen des Hebels 34 mit den Kolben 20 angreift und auf Grund des ungleicharmigen Hebels das Motordrehmoment erzeugt.

Fig. 4e zeigt das Arbeitsspiel nach einer weiteren 90° Drehung um die Drehachse X. Dargestellt ist der Zeitpunkt, bei dem der Expandiervorgang in dem Arbeitsraum 5 und auch der Verdichtungsvorgang in dem Arbeitsraum 4 beendet ist, so daß durch eine Zündanlage das verdichtete Gasgemisch in dem Arbeitsraum 4 gezündet wird.

Fig. 4f zeigt schließlich Arbeitsraum 5 am Ende des Auspuffvorgangs, während für den Arbeitsraum 4 der Expandiervorgang beendet ist.

**Ansprüche**

1. Rotationskolbenmotor mit einem feststehenden Motorgehäuse und einem in einem Absperrteil umlaufenden und an einer Motorwelle angreifenden Kolben, der im Absperrteil umlaufende Arbeitsräume mit sich periodisch änderndem Volumen bildet, dadurch gekennzeichnet, daß das Absperrteil (10) ringförmig ausgebildet ist mit mindestens zwei in Umfangsrichtung nebeneinander angeordneten und um eine Drehachse X umlaufenden bogenförmigen Kolben (20), zwischen denen die Arbeitsräume (4, 5) für einen Hubeingriffgebildet werden, und die Kolben (20)in radialem Eingriff stehen mit jeweils einem Hebelarm (34) eines exzentrisch zur Drehachse X gelagerten und an der Motorwelle (30)-befestigten Hebels (34)zur Übertragung eines Kraftmoments von den Kolben (20) auf die Motorwelle (30) oder umgekehrt, wobei die jeweilige Länge der Hebelarme (38) bei Drehung der Kolben (20) unter Ausbildung ungleichlanger Hebelarme (38) zur gleichförmigen Drehung des Hebels (34) über Verbrennungsdruck variiert.

2. Rotationskolbenmotor nach Anspruch 1, dadurch gekennzeichnet, daß der Hebel (34) zur exzentrischen Lagerung an einer Gelenkwelle (32) gelenkig befestigt ist, die einerseits an der Motorwelle (30) und andererseits an einem Lager (40) im Motorgehäuse (1) mit einer Auslenkung A zur Drehachse X angelenkt ist.

3. Rotationskolbenmotor nach Anspruch 2, dadurch gekennzeichnet, daß das Lager (40) von einem fest mit dem Motorgehäuse (1) verbundenen, innenverzahnten Hohlrad (43) und einem mit diesem kämmenden Ritzel (42) gebildet wird, wobei die Gelenkwelle (32) an dem Ritzel (42) befestigt ist.

4. Rotationskolbenmotor nach Anspruch 3, dadurch gekennzeichnet, daß die Zähnezahl der Innenverzahnung (44) sich zur Zähnezahl des Ritzels (42) wie 2 : 1 verhält.

5. Rotationskolbenmotor nach einem der Ansprüche 2 bis 4, dadurch gekennzeichnet, daß bezogen auf die Drehachse X die Auslenkung A größer als die Exzentrizität E ist.

6. Rotationskolbenmotor nach einem der Ansprüche 1 bis 5, dadurch gekennzeichnet, daß das Absperrteil (10) als Läufer ausgebildet ist, der sich gleichförmig mit den Kolben (20) um die Drehachse X bewegt.

7. Rotationskolbenmotor nach einem der Ansprüche 1 bis 5, dadurch gekennzeichnet, daß das Motorgehäuse (1) Ein- und Auslaßöffnungen (3, 2)-aufweist, die sich im wesentlichen bananenförmig in Umfangsrichtung erstrecken.

8. Rotationskolbenmotor nach Anspruch 7, dadurch gekennzeichnet, daß in jedem Arbeitsraum (4, 5) ein Dichtkörper (11) mit Dichtringen so angeordnet ist, daß er zugleich die Funktion des Ein- und Auslaßdichtkörpers übernimmt.

9. Rotationskolbenmotor nach einem der Ansprüche 1 bis 8, dadurch gekennzeichnet, daß jeweils zwei Kolbenstirnflächen (25) benachbarter Kolben (20) einen Arbeitsraum (4, 5) begrenzen, so daß die Zahl der Arbeitsräume (4, 5) gleich der Zahl der Kolben (20) ist.

10. Rotationskolbenmotor nach einem der Ansprüche 1 bis 9, dadurch gekennzeichnet, daß Dichtleisten (21) an den Kolbenenden vorgesehen sind.

11. Rotationskolbenmotor nach einem der Ansprüche 1 bis 10, dadurch gekennzeichnet, daß die Kolben (20) radiale Durchbrüche (19) aufweisen, in denen der jeweils eine Hebelarm (38) radial verschiebbar angelenkt ist.

12. Rotationskolbenmotor nach einem der Ansprüche 1 bis 11, dadurch gekennzeichnet, daß die Kolben (20) zusätzliche radiale Bohrungen (23) besitzen für eine gleichmäßige Ölverteilung in dem Absperrteil (10).

13. Rotationskolbenmotor nach einem der Ansprüche 1 bis 12, dadurch gekennzeichnet, daß das ringförmige Absperrteil im Bereich der sich periodisch bildenden Arbeitsräume (4, 5) aus einer teilkreisförmigen Außenwandung (12) und gegenüberliegenden Innenwandung (13) besteht.

14. Rotationskolbenmotor nach einem der Ansprüche 1 bis 13, dadurch gekennzeichnet, daß zwei im wesentlichen halbkreisförmige mit Abstand zueinander angeordnete Kolben (20) vorgesehen sind.

15. Rotationskolbenmotor nach Anspruch 4 und 14, dadurch gekennzeichnet, daß die Kolben (20) im Viertaktverfahren rotierbar sind.

16. Rotationskolbenmotor nach einem der Ansprüche 1 bis 15, dadurch gekennzeichnet, daß jedem Arbeitsraum (4, 5) eine Zündkerze (50) zugeordnet ist.

Fig. 1

Fig. 2

Fig. 3

Fig. 4 a

Fig. 4 b

Fig. 4 c

Fig. 4 d

Fig. 4 e

Fig. 4 f